# EUROPEAN PATENT APPLICATION

(11) **EP 2 816 348 A1**
(43) Date of publication of application: **24.12.2014**
(21) Application number: 13173007.9
(22) Date of filing: 20.06.2013
(51) Int. Cl.: G01N 27/28

(54) **Electrochemical measurement device**

(71) Applicant: Universität Wien, 1010 Wien (AT)
(72) Inventor: Bachmann, Gert, 1050 Wien (AT)
(74) Representative: Schwarz & Partner

(57) **Abstract**

The invention relates to an electrochemical measurement device (1), comprising at least one essentially cylindrical electrode holder module (10) with a flow-through cuvette (11) of constant diameter (16) and having a longitudinal axis (6), and further comprising two end caps (30) mounted on the open module ends (15) of the electrode holder module (10) on opposite sides thereof to form a cavity for receiving a liquid, wherein the electrode holder module (10) is provided with a built-in electrode block (12) comprising at least one electrode joint opening (13) for holding an electrochemical sensor (70, 80, 90) and/or an electrode (430, 440, 450), with the at least one electrode joint opening (13) running perpendicular to the longitudinal axis (6) into the flow-through cuvette (11). The device can be used for measuring in-flow electrochemical properties of colloidal matrices in laboratory settings, water treatment, horticulture, and food and beverage manufacturing among others.

## Description

The present invention concerns an electrochemical measurement device according to the preamble of claim 1.

Permeation speed of substances through gels and slimy matrices was previously monitored mainly by isotope tracing, but not yet employing electrochemical measurements. Until now electrode holders are only available as joint sockets in combination with beaker-like containers for measuring either static or stirred liquids in vitro. No flow-through measurement devices or membrane holder devices for investigating electrochemical properties of partition-measured fluids are commercially available.

From Research articles like "A study of macromolecular diffusion through native porcine mucus" by M.A. Desai et al., published in Experientia 48 (1992), pp. 22-26, and "Mass transfer through meat. Part I. Determination of diffusion coefficient of nitrite by time lag method" by A. Oztan et.al., published in Journal of Food Engineering 67 (2005), pp. 387-391, usage of a transparent thermoplastic diffusion chamber consisting of two half-cells for estimation of effective diffusion coefficients of molecule or ion transport through calf meat layers or native mucus gel, respectively, is known in the art. Each half-cell of the diffusion chamber contains a round chamber that is held together with screw connections. Two polycarbonate membranes are placed on either side of a nylon netting spacer. The chambers are secured with O-rings in position to provide a water-tight connection. The nylon spacer maintains a finite unstirred diffusion layer between the membranes. For mucus studies, a sample of mucus is layered on the nylon spacer before replacing the upper polycarbonate membrane. Both chambers have to be filled simultaneously with buffer solution and/or sample solution to maintain constant flow and pressure conditions on each outer side of the double membranes and to prevent a hydraulic pressure across the thin unstirred diffusion layer between the two membranes. With a peristaltic pump solution fractions can be withdrawn from one half-cell chamber and simultaneously buffer solution can be replaced in the other half-cell chamber at equivalent flow rates to maintain constant volumes in both chambers.

In the article "Cystic Fibrosis Sputum. A barrier to the Transport of Nanospheres" by N.N. Sanders et.al., published in the American Journal of Respiratory and Critical Care Medicine, Vol. 162 (2000), pp. 1905-1911, a vertical diffusion chamber system with three compartments is described. This system consists of two half-cells both on a donor side and an acceptor side, separated from each other by a thin layer of sputum that is held in place with the aid of two track-etched porous polycarbonate membranes. Again to prevent a difference in hydraulic pressure across the thin sputum layer upon filling of the donor compartment, the acceptor compartment has to be filled simultaneously.

WO 2004/047977 A1 discloses a method and device for modifying micro particles. The device consists of two chambers that are each capable of being filled with liquid, and the two chambers are separated from each other by a gelatinous carrier medium between them. The distance between the first and second chambers is defined by a thickness of the gelatinous carrier medium that forms contact areas with each chamber. Electrodes that can be inserted into the half-cells are designed as plates arranged essentially parallel to the gelatinous carrier medium.

These half-cell devices are disadvantageous in that for stirred solutions each half-cell either requires a mechanical stirrer connected to a motor drive and projecting into each half-cell or a closed circuit which has to pump over the liquid accordingly. Another disadvantage is that only one diffusion layer separated by two parallel membranes can be implemented between the two half-cells.

US 4,468,951 A relates to a permeation testing apparatus for determining the permeation of a chemical through a test material like a sheet of protective clothing material. The clothing material acts as a barrier separating for instance a hazardous liquid chemical from a collecting medium that can be a liquid or a gas. The testing apparatus has cylindrical outside walls and a shallow cylindrical well in one face and a conical well in the opposite face. The test material to be tested has to be placed between two units with the face of one unit having the cylindrical well facing the other unit face with the conical well. In another design the testing apparatus has several cylindrical compartments each with test materials fastened between neighbouring units. The units have to be securely fastened together by bolts between end plates with the piece of material there between and to be tightened by nuts to seal each permeation unit.

Unfavourably, the solid testing material according to this device is crushed and has to act as a sealing means between two neighbouring units that have to be tightened via bolts. Thus, sensitive materials that must not be mechanically stressed, that are available only in small amounts and/or that are of fluid or gel-like consistency can not be determined with this testing apparatus. Another disadvantage is that tools are required for assembly and to fasten and unfasten the bolt means, respectively, which is why inserting and exchanging the testing materials between the units is labour-intensive and time-consuming.

The object of the invention is to provide a measurement device that overcomes the disadvantages of the devices known in the art. A further object is to enhance the flexibility of measurement devices and to provide a new testing device that can be easily adapted and configured according to the individual requirements of the characterisation of electrochemical functional properties of several native and artificial slimes in soils and organisms.

This object is achieved by an electrochemical measurement device according to the preamble of claim 1 with the features of the characterizing part of claim 1. The subjects of the dependent claims concern further advantageous embodiments of the invention.

According to the invention, with an electrochemical measurement device comprising at least one essentially cylindrical electrode holder module with a flow-through cuvette of constant diameter and having a longitudinal axis, and further comprising two end caps mounted on the open module ends of the electrode holder module on opposite sides thereof to form a cavity for receiving a liquid, the electrode holder module is provided with a built-in electrode block comprising at least one electrode joint opening for holding an electrochemical sensor and/or an electrode, with the at least one electrode joint opening running perpendicular to the longitudinal axis into the flow-through cuvette.

The inventive electrochemical measurement device is a modular device that is designed to allow the separate as well as simultaneous measurement of electrochemical properties in a flow-through system. With the modular measurement device monitoring the permeation dynamics of pH-active and/or redox potential (RP)-active substances through colloidal and viscous (slimy) matrices like gels is possible. The device combines sockets for pH, RP and/or conductivity electrodes with an array of tubings and membrane holders for the partitioned measurement of electrochemical properties of viscous matrices such as gels, slimes or biofilms, and of permeation speed of substances through these matrices in a flow-through mode. The substances are usually introduced into and removed (sucked off) from the cuvette of the inventive device via the end caps, preferably provided with a Luer lock adapter to ensure handling without oxidation and CO₂ absorption problems. For permeation measurements the matrix to be used is introduced in and held in place by a matrix container which is then arranged between two cuvette blocks.

According to the invention, viscous matrices may be aqueous or non-aqueous. They may either be synthetic or native matrices. In one embodiment of the present invention, the viscous matrices comprise hydrocolloids, in particular polysaccharides, such as agar, alginate, arabinoxylan, carrageenan, carboxymethyl cellulose, cellulose, curdlan, gelatine, gellan, beta-glucan, guar gum, gum arabic, locust bean gum, pectin, starch, xanthan gum, or mixtures thereof.

The substances envisaged by the application encompass, among others, ions/salts, pharmaceutically active small molecules, antioxidants, pollutants, heavy metals, and pesticide residues. Gaseous substances are likewise included in the present invention which in this case provides for appropriate gas sensors, suitable membranes and gas tight sensor connectors in place of pH, RP and/or conductivity electrodes and the glass microfiber membrane, for example.

The device aims to allow for simulation of biological substance uptake processes and polymerization or depolymerisation, respectively, events as monitored by conductivity and redox potential changes employing appropriate software like tiamo® software distributed by Metrohm Herisau®.

Potential applications of the inventive electrochemical measurement device are for example plant physiology (nutrient uptake studies, rhizosphere research), pharmacy (uptake kinetics of substances through mucus layers, dose response) and physical chemistry (determination of diffusion speed, activity coefficient measurements, voltammetry and amperometry of colloidal matrices, polymer research). Additionally, the inventive device would prove useful in numerous other industrial fields such as water treatment, wastewater treatment, agricultural plant irrigation, hydroponics, food and beverage industry, cosmetics industry, wine analytics, biomedical research, horticulture, petroleum refinery, etc.

Preferably, the electrode block comprises two or more electrode joint openings to hold electrochemical sensors and/or electrodes. Thus, the electrode holder module is designed for flow-through measurements with all electrochemical sensors and/or electrodes centrally positioned on the electrode block on one side, preferably the top side, of the electrode holder module. Spillage of electrolyte solution within the flow-through cuvette due to exchange of sensors during operation of the measurement device can be reduced to a minimum.

The electrode joint openings are preferably each arranged substantially vertical to the longitudinal axis of the flow-through cuvette. In this arrangement electrodes and/or electrochemical sensors that are plugged in the electrode joint openings are each positioned substantially vertical to the longitudinal axis of the flow-through cuvette and project into an electrolyte solution within the cuvette also substantially vertical to the flow-through direction of the electrolyte solution within the flow-through cuvette.

According to another embodiment of the invention, the electrode block comprises two or more electrode joint openings, wherein the electrode joint openings are arranged in parallel to each other. Advantageously the electrodes and/or electrochemical sensors each project in parallel into an electrolyte solution within the flow-through cuvette.

Expediently, an electrochemical measurement device according to the invention is equipped with removable end caps that each has an opening in flow-through direction, preferably an opening with a Luer lock adapter. In this embodiment of the invention, input- and output stream openings of electrolyte solutions are arranged on the end caps. As the end caps can be flexibly attached to and detached from, respectively, the free module ends of an electrode holder module it is easily possible to plug together several modules in series - if necessary via adapters - and to seal their free ends with the end caps accordingly. Thus, the inner volume of the electrochemical measurement device can be easily adjusted according to individual measurement requirements. In a preferred embodiment of the invention, the input-and output stream openings are each equipped with a Luer lock adapter. Thus equipped, i.e., equipped with this standardized lock adapter, respective suited syringes and/or connection tubes can easily and exchangeably be connected to the end caps of the measurement device.

According to the experimental set-up, it is also possible to use electrode joint openings of the electrode block as additional input- or output stream openings for bypass flow or for make-up of electrolyte solution.

A particular beneficial characteristic of the electrochemical measurement device according to the invention is to be seen in the option to fill the device, i.e., the flow-through cuvette, air bubble free, which eliminates oxidation and CO₂ absorption problems.

In a further embodiment of the invention, the electrochemical measurement device further comprises one or more matrix container modules and one or more further electrode holder modules, wherein the electrode holder modules and the matrix container modules are alternately connected in series, wherein each matrix container module is positioned between two electrode holder modules. In this arrangement according to the invention, at least two chambers or half-cells separated via a matrix container module are realised. The matrix container module contains at least one membrane that can separate two adjacent substances, for example two electrolyte solutions.

Thus, for instance a first electrolyte solution flows through a first electrode holder module and a second electrolyte solution flows through a second electrode holder module whereby the first and the second electrode holder module are separated by an intermediate matrix container module. The intermediate matrix container module can comprise a single membrane, preferably a semi-permeable membrane that separates the first and the second electrolyte solutions. In another embodiment of the invention, it is also possible that the intermediate matrix container comprises two membranes that are either arranged in parallel with a small spacer in between or with a larger distance forming an in-between matrix volume. Thus, another substance can be inserted in the matrix volume of the diffusion layer between the two membranes.

According to another preferred embodiment of the invention, the electrochemical measurement device is characterized in that the open module ends of the electrode holder module are each provided with a pressure sealing device sealing liquid-tight with a corresponding counter part inserted in the end cap and/or with a matrix container module. In this embodiment the single modules, namely electrode holder modules and/or matrix container modules, can be easily connected with each other in series via pressure sealing devices.

Advantageously each pressure sealing device includes at least one O-ring sealing. In this preferred embodiment liquid-tight connections of adjacent module parts can be easily achieved due to the O-ring sealing. Thus, the single module parts are joined via plugging in the corresponding sealing devices of the modules.

Suitably, with the electrochemical measurement device according to the invention, each matrix container module comprises connecting adapters on its open ends for connecting with adjacent electrode holder modules.

In a further advantageous execution of the invention, each matrix container module comprises an outer tube and an inner tube that are concentrically positioned in longitudinal direction, wherein the inner tube is adapted for positively retaining at least one membrane carrier.

Advantageously, the electrochemical measurement device according to the invention further comprises at least one membrane carrier, wherein an outer diameter of a membrane carrier body positively fits into an inner tube of the matrix container module. Thus, the membrane carrier body can be plugged into the inner tube of the matrix container module.

Expediently, the membrane carrier comprises at least two membranes spaced apart by an intermediate spacer. Thus, the spacer between the two membranes defines a small matrix volume that can be filled with a substance forming the diffusion zone, such as native mucus.

Within the scope of the invention it is also possible to position two diffusion zones with two membranes each spaced apart by an intermediate spacer on both ends of the membrane carrier to enlarge the matrix volume of the zone between the membrane arrangements. Flexibly tiny amounts of native matrix substances as well as large volumes of matrices can be examined by the inventive electrochemical measurement device. Thus, a universal membrane carrier and matrix container combination in tube modules is realized within the scope of the invention.

In a further embodiment, the electrochemical measurement device further comprises at least one snap-on rack for supporting the electrode holder module and/or the matrix container module in a plugged together arrangement, wherein the electrode holder module and/or the matrix container module are preferably securely mountable on the at least one snap-on rack. Thus, the modules of the electrochemical measurement device are firstly plugged together in a serial arrangement in longitudinal direction. Secondly, the measurement device in total or in sections is mounted on one or more snap-on racks. Advantageously, system pressure within the flow-through cuvette and pressure on the outsides of the electrochemical measurement device, respectively, are absorbed by the snap-on rack.

Preferably, the modules are securely positioned on the snap-on rack by snap locks to ensure a flexible and combinable module assembly.

Advantageously, the module parts of the electrochemical measurement device are made of polyacrylic glass to ensure sight into the flow-through cuvette compartments of the device. The use of other suitable materials, in particular polyether ether ketone (PEEK), is also encompassed by the present invention. In a preferred embodiment, all connections are O-ring sealed and designed as snap-on connections. Thus, with an electrochemical measurement device according to the invention a unique combination of an easy-to-clean and easily assembled (e.g., polyacrylate) tubing system with semi-permeable membrane holders and precision electrode holders in a flow-cell system is created that allows to investigate for example various biological and artificial mucous and colloidal matrices.

According to another preferred embodiment, the electrochemical measurement device, including any modules described above, is provided in a substantially miniaturized configuration. Such miniaturized device can advantageously be used as automated measuring device and can, for example, be employed as detector in ion chromatography. Thereby, it would be possible to flexibly use conductivity or amperometric (voltammetric) detectors with the electrochemical measurement device according to the invention in serial arrangement in ion chromatography systems, and, additionally, to transfer the flow to a post column derivatisation unit and a UV/vis detector.

According to another inventive aspect, the present invention is directed to a method for measuring permeation of substances through viscous matrices such as gels and slimy matrices, comprising use of the electrochemical measurement device according to the invention in any of the embodiments described above.

In one further aspect, the invention also provides the inventive electrochemical measurement device for use in nutrient uptake studies of plants.

In another aspect, the invention provides the inventive electrochemical measurement device for use in rhizosphere research.

In still another aspect, the invention provides the inventive electrochemical measurement device for use in the measurement of the uptake of pharmaceuticals through mucus layers or for use in the determination of dose responses of drugs in body tissue.

In a further aspect, the invention also provides the inventive electrochemical measurement device for use in the determination of diffusion speed of chemical compounds through colloidal matrices or for use in the measurement of activity coefficients of chemical species in chemical substance mixtures.

Further details and advantages of the electrochemical measurement device according to the invention will become more apparent in the following description and examples as well as the accompanying drawings, wherein:
- Fig. 1 depicts a measurement device according to the invention in a three stage assembly in an isometric exploded view;
- Fig. 2 shows the measurement device of Fig. 1 in operating modus fixed on a snap-on rack;
- Fig. 3 shows an electrode holder module in an isometric view;
- Fig. 4 depicts a matrix container module with a membrane carrier in an isometric exploded view;
- Fig. 5 illustrates a membrane carrier in detail in an isometric exploded view;
- Fig. 6 shows the membrane carrier of Fig. 5 with transparent contours;
- Fig. 7 shows the experimental embodiment according to application example 1 in a partly transparent isometric view;
- Fig. 8 shows the experimental embodiment according to application example 2 in a partly transparent isometric exploded view;
- Fig. 9 shows the experimental set-up of application example 3 in a partly transparent isometric exploded view;
- Fig. 10 shows the experimental set-up of application example 4 in a partly transparent isometric exploded view.
- Fig. 11 shows pH, RP and conductivity measurements in A) demineralised water and B) acetate buffer, over time for three plant species according to Example 1.
- Fig. 12 illustrates the PCA of electrochemical parameters versus root exudate dry matter and substrate induced respiration (SIR) according to Example 1.
- Fig. 13 illustrates electrochemical values (ph, RP, EC) measured in 20 mL 4mM ascorbic acid solution injected in the inventive device compared to those measured in demineralised water.
- Fig. 14 to 16 show the permeation times for ascorbate measured according to the setting of Example 2.

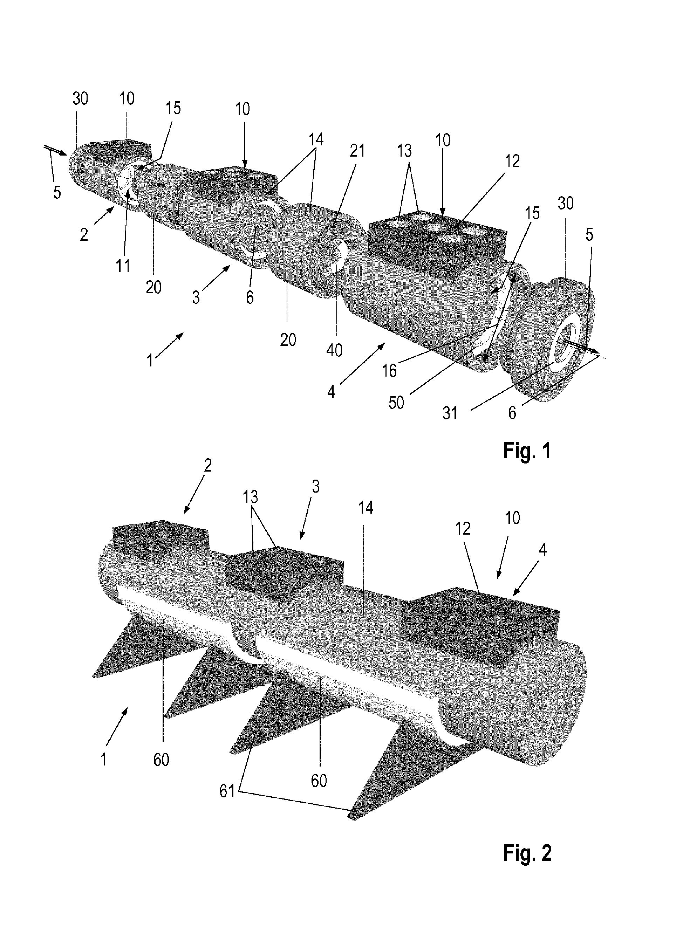

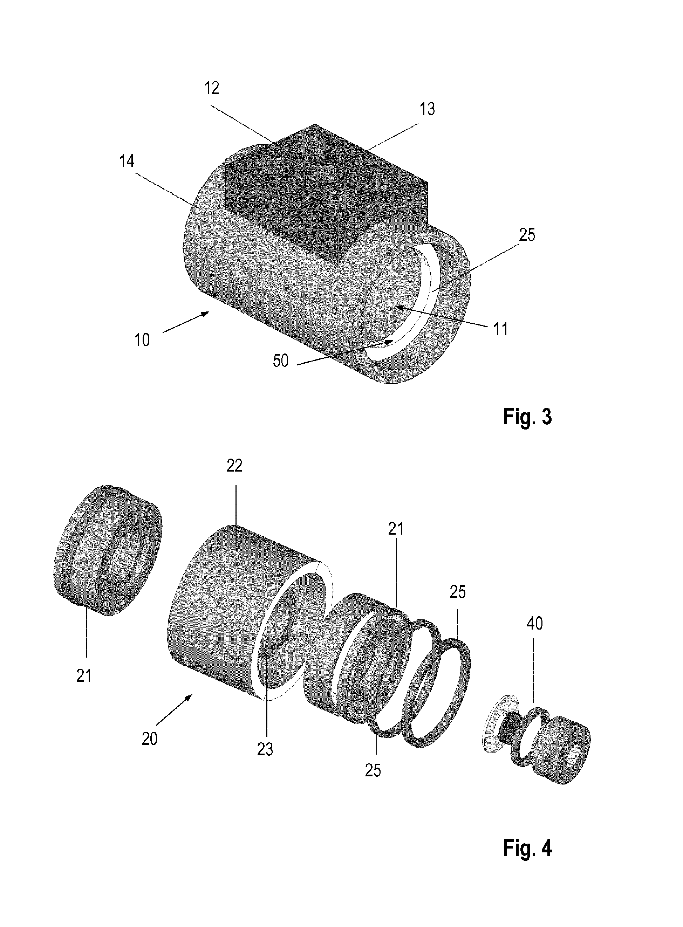

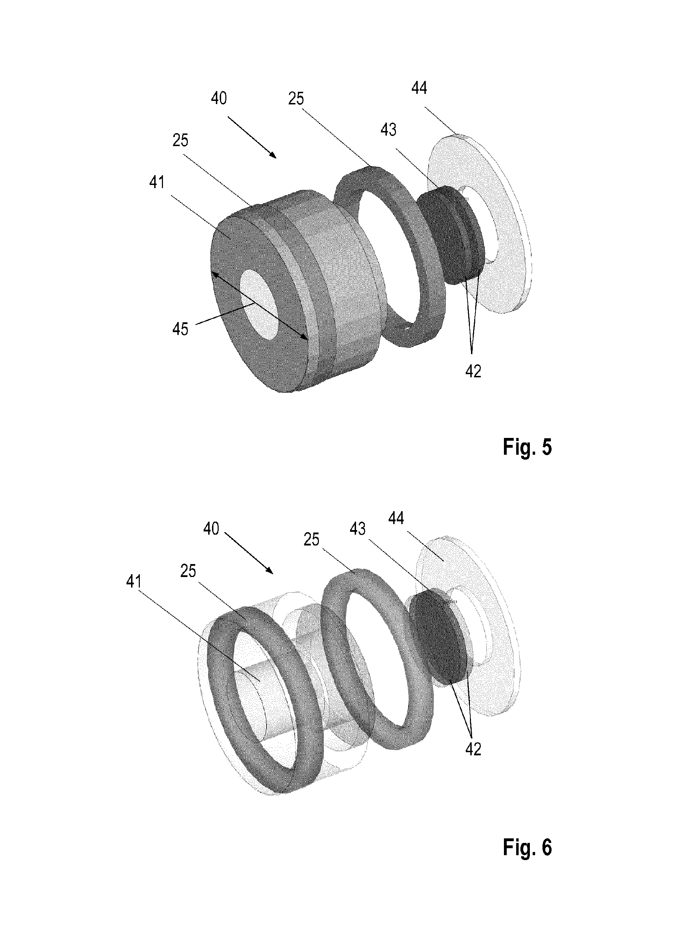

Fig. 1 depicts an electrochemical measurement device 1 according to the invention in a three stage assembly. The first stage 2, the second stage 3 and the third stage 4 are positioned in series in flow-through direction marked with arrow 5 of an electrolyte solution and positioned in longitudinal direction 6, respectively. Each stage 2, 3, 4 contains an electrode holder module 10 with a flow-through cuvette 11 that is also positioned in longitudinal direction 6. Each electrode holder module 10 is equipped with an electrode block 12 that is attached on the outside of the electrode holder module 10. In the depicted embodiment, each electrode block 12 contains five electrode joint openings 13 that are arranged substantially vertical to the longitudinal axis 6. The electrode holder modules 10 are comprised of substantially cylinder-shaped tubes 14 of polyacrylate material. On the open module ends 15 of the electrode holder module 10 having a module diameter 16 a matrix container module 20 can be either plugged in directly or via a connecting adapter 21. The matrix container module 20 is described in more detail in Fig. 4. The free or open module ends 15 of the electrode holder module 10 are each equipped with O-ring sealings 25 on their inner sides, which form a liquid-tight sealing with corresponding module counter parts. O-ring sealings 25 are part of pressure sealing devices 50 between adjacent module parts. Two (removable) end caps 30 are each equipped with Luer lock adapters 31 to comfortably connect appropriate syringes or tube connectors with the end caps 30 to establish input- and output streams of the flow-through 5 measurement device 1. The matrix container modules 20 each hold membrane carriers 40 that are shown in more detail in Figures 5 and 6, respectively.

Fig. 2 relates to the electrochemical measurement device 1 of Fig. 1 shown in fully assembled operating modus fixed on two snap-on racks 60. Each snap-on rack 60 contains base sockets 61 that ensure a safety stand of the individually assembled device 1. Due to snap-on locks between the snap-on racks 60 and the modules 10, 20 of the measurement device 1, a secure and pressure absorbing connection is accomplished. The snap-on locks can easily be opened and closed.

For example, the base sockets 61 consist of tube sectors with 120 mm in length, 5 mm in thickness and an angle of 185° mounted on two triangular base plates and taking up the pressure between the modules 10, 20. Thus, the need for screws or toggle levers to seal the device 1 in a pressure-tight way and to mount the device 1 on the rack 60 can be avoided. A quick snap-on assembly of the modules 10, 20 is comfortably achieved and enhances flexibility of the inventive device 1 to be easily adapted according to different experimental set-ups.

Fig. 3 shows an electrode holder module 10 in an isometric view. The module 10 is made of a polyacrylate tube 14 with for instance an outer diameter of 60 mm width. In the depicted embodiment, the electrode block 12 has five customizable electrode joints 13 with variable diameters between 14 mm and 23 mm to receive different electrochemical sensors and/or electrodes. Each free module end 15 is equipped with a pressure sealing device 50 comprising a single O-ring seal pressure ring 25.

Fig. 4 depicts a matrix container module 20 with a membrane carrier 40. The matrix container module 20 comprises connecting adapters 21 to connect the matrix container module 20 with adjacent electrode holder modules 10. The matrix container module 20 has an outer tube 22 as connector to the electrode block 12 with an outer module diameter approximately the same as the module diameter 16 of the tube 14 of the electrode holder module 10. An inner tube 23 can be used as large matrix container and filled with a matrix substance. O-ring sealings 25 are provided accordingly to ensure a liquid-tight assembly of the module 20.

A membrane carrier 40 that holds membranes and acts as a small assay matrix carrier positively fits into the inner tube 23 of the matrix container module 20. The outer tube 22 and the inner tube 23 are concentrically positioned in longitudinal direction 6 of the matrix container module 20.

Fig. 5 illustrates a membrane carrier 40 in detail. Fig. 6 shows the membrane carrier 40 of Fig. 5 with transparent contours. The membrane carrier 40 has an universal membrane carrier body 41 with O-ring-sealings 25 on its outsides that positively fit and seal the membrane carrier 40 inside of its plugged-in position within the inner tube 23 of a matrix container module 20. Two membranes 22 that are spaced apart by an intermediate spacer 43 are fixed via membrane pressure plates 44 in their position at the membrane carrier 40. An outer diameter 45 of the membrane carrier body 41 positively fits into the inner tube 23 of the matrix container module 20.

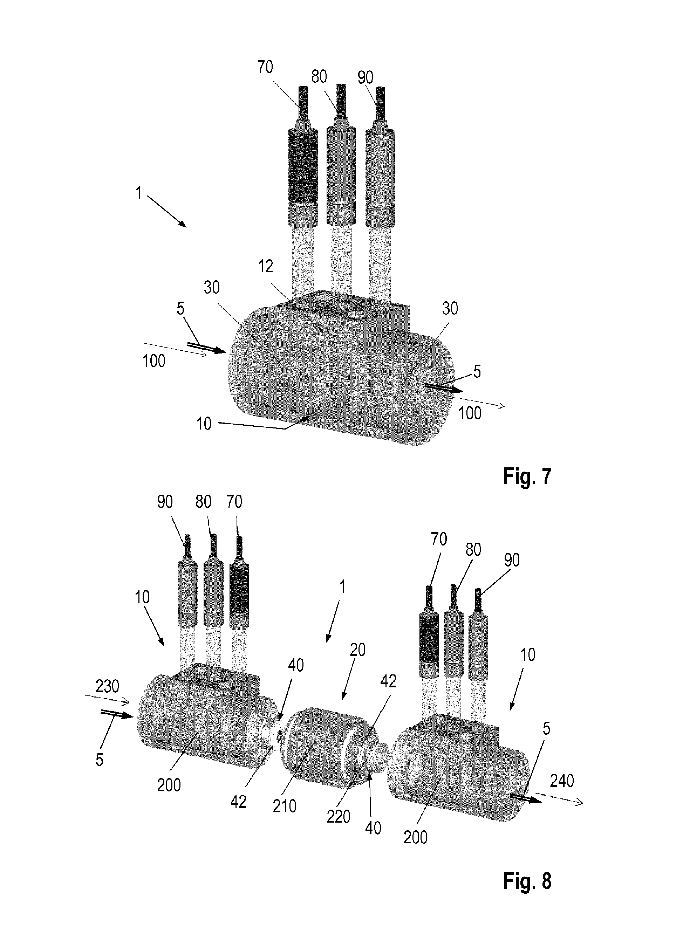

The following Figures 7 to 10 relate to several application examples to substantiate the high flexibility of an electrochemical measurement device according to the invention and its advantageous modular design that may be flexibly combined for many specific applications.

Fig. 7 shows the experimental embodiment according to Example 1. For this application, only one electrode holder module 10 having two end caps 30 with Luer lock adapters 31 is used. In addition to a conventional electrochemical measurement beaker, the inventive electrochemical measurement device 1 being constructed for flow-through measurement of electrolyte solution in flow-through direction 5 facilitates continuous monitoring of electrochemical sensor signals. Optionally, a matrix container, e.g., activated carbon or molecular sieves, may be added. The advantage over manual sampling consists in the option of using the monitored signals for online alerts or automated switching processes. In Fig. 7 a redox potential sensor 70, a pH sensor 80 and a conductivity sensor 90 each are inserted in electrode joint openings 13 of the electrode block 12. The electrochemical sensors 70, 80 and 90 are each positioned substantially perpendicular to the longitudinal axis of the electrode holder module 10. A monitored solution 100 (for example of a plant nutrient) is pumped )for instance with a flow rate of 1-1000 ml/min) in direction 5 through the measurement device 1. Peripheral equipment like peristaltic pumps, storage vessels or electronic data collection devices to store and evaluate the electrochemical signals of the sensors 70, 80 and 90 are not explicitly shown.

Fig. 8 relates to Example 2 and shows the experimental embodiment in a partly transparent isometric exploded view. For this application, two electrode holder modules 10 with a matrix container module 20 in between are used. Furthermore two membrane carriers 40 are employed in the middle, as is depicted in Fig. 8. The enclosed matrix of choice, for example artificial or native mucus from an intestinal mucosa, is enclosed in a matrix container, flanked by the two electrode holder modules 10, between two dialytic membranes 42 that allow for the permeation of water and the tested substance but retain the mucus matrix. The membranes 42 are attached on the universal membrane carriers 40 that may also be configured for testing small amounts of native mucus. The first and the second electrode holder modules 10 in streamwise direction 5 are each filled with a buffer solution 200. A large matrix volume 210 in an artificial simulation is placed within the matrix container module 20 between the two membrane carriers 40. Optionally, a small matrix volume 220 of native mucus is placed between the two membranes 42 in the spacer 43 area.

A tested substance 230 is applied with a syringe via a Luer lock adapter 31 into the first electrode holder module 10. The electrochemical signals (pH 80, redox potential 70, conductivity 90) are continuously monitored, and the change of the signals of the electrochemical sensors 70, 80, 90 between the first electrode holder module 10 or electrode block 12, respectively, and the second electrode block 12 in streamwise direction 5 at the upper end of the experimental setup indicate the diffusion speed. Optionally, the retention of the substance in the slimy matrices may be measured by applying an appropriate flow of water either by hydrostatic pressure or slow flow pumping, by example via a peristaltic pump. The liquid 240 leaving the setup may be further monitored using UV detectors or fraction collection and subsequent analysis.

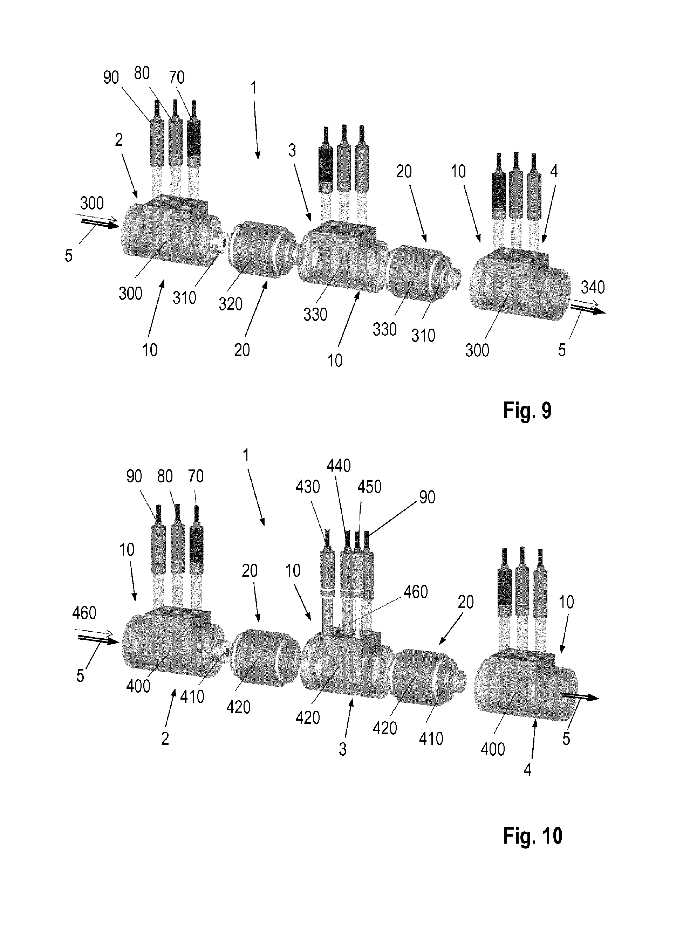

Fig. 9 shows the experimental set-up for ion uptake through compartment boundaries as found in organism tissues like plant cell walls in a partly transparent isometric exploded view. This application employs a three stage setup with three electrode holder modules 10 and three electrode blocks 12, respectively, and two matrix container modules 20. In streamwise flow direction 5 the first stage 2 of electrode holder module 10 contains a buffered solution 300 with a continuous supply of plant nutrients in the form of a salt or a salt mixture (like KNO₃) and is equipped with a pH-, RP-, and a conductivity sensor. The buffer solution has a pH of 7 and is buffered with 1mM KNO₃. The next module in direction 5 is a matrix container module 20 filled with a cationic exchange resin 320, enclosed by cellulose filter disks 310 with pore diameters of, e.g., 20µm that are held in place by the membrane carriers 40. The second stage 3 or middle electrode holder module 10 and a further connecting matrix container module 20 are both filled with matrices 330 similar to a plant cytosol containing polygalacturonic acid. These pectin matrices 330 are monitored employing the same electrochemical sensors 70, 80, 90 or, alternatively, ion sensitive sensors. The third stage 4 of electrode holder module 10, separated for instance by another 20µm cellulose filter membrane 310 from the pectin matrix 330 of the second matrix container module 20, contains a buffer solution 300 and the same sensors as in the first electrode block. The experiment is concluded when the sensors 70, 80, 90 in the electrode holder module 10 of the third stage 4 read the same values as those in the first electrode holder module 10. The output stream 340 with a flow rate of 1-10 ml/min is led to a fraction collector.

Fig. 10 shows the experimental set-up for the voltammetric determination of potential antioxidants like flavonoides. This application also makes use of a three stage setup 2, 3, 4. As indicated in application example 3, the first stage 2 and third stage 4 with electrode holder modules 10 each contain buffer solutions 400 and pH-sensors 80, redox potential sensors 70 and conductivity sensors 90. The second stage 3 with middle electrode holder module 10 and the adjacent matrix container modules 20 are filled with a reagent matrix 420 containing the substances for a desoxyribose assay and are separated from the starting and concluding electrode holder modules 10 by dialytic membranes 410 as described in the diffusion assay of application example 2 and Fig. 8, respectively. The middle electrode block 12 is fitted with a conductivity sensor 90 and the electrodes needed for voltammetric determination of redox active substances. In this embodiment, a carbon working electrode 430, a Ag/AgCl reference electrode 440 and a platinum counter electrode 450 are used. Reagents 460 may be added by injection in the electrode holder module 10 of first stage 2 and also by direct addition in an electrode joint opening 13 of electrode block 12 of the middle or second stage 3.

Optionally, a slow flow may be applied. The anti- or pro oxidative properties of reagents 460 like flavonoids and the degree of polymerisation may be tested along with their permeation speed through a matrix. To the latter end of the measurement device 1, a concluding voltammetric detection of the traced substances collected at the upper end of the measurement device 1 will be necessary.

### Example 1

Usage of the electrochemical measurement device according to the invention for continuous monitoring of ion containing liquids (such as nutrient solutions or waste water): Endpoint determination for root exudate extraction using electrochemical monitoring

Electrochemical monitoring (EC) of nutrient solutions is used globally. In contrast, research on root exudates represents a challenge because the choice of extraction media is crucial and the exact duration of root incubation for extraction is hard to estimate as concentrations are very low and the exuded compounds are very diverse. Frequently, radioactive labelling (C14) was employed (A. Granssee, L. Wittenmayer, Journal of Plant Nutrition and Soil Science, Vol. 163(4), 2000:381-385). Advanced cultivation chambers were developed, but not frequently applied due to complicated usage and artificial plant growth (Puschenreiter et al, Plant and Soil, 271, 2005:205-218).

In this example, three plant species (*Saccharum o., Zea m., Lycopersicon e.*) were grown in soil until the pots were densely rooted in three replicates. Fresh and dry weight of the plant biomass was measured. The plant roots were cleaned from soil with tap water, incubated in 1000 mL laboratory bottles with demineralized water and, alternatively, with 1 mM 5.5 pH acetate buffer solution, to extract root exudates. In order to assess the time point of optimal extraction (meaning a compromise between maximum amount of extracted substances and avoidance of oxidation and polymerisation), the extraction media were continuously monitored for electrochemical parameters (pH, RP, conductivity) employing the device according to the invention in the basic configuration as a flow through cuvette (Fig. 7). The Luer lock adapter at one of the end caps of the device was fitted with a tubing which was immersed in the extraction bottle. Employing a syringe (and later on a peristaltic pump) fitted to an adapter at the other end of the device, the content of the inventive device was filled air bubble free and periodically replaced by the liquid in the extraction bottles, the efflux returned to the extraction bottles immediately after measurement. Results were monitored periodically, the endpoint of extraction chosen by simultaneous data evaluation when equilibrium was reached (asymptotic approach, less than 5 % signal change per minute). The extraction media were concentrated by means of rotational vacuum concentrators and cleaned with a molecular sieve (Amberlit XAD 1180). The dried exudates were weighed on a 0.01 mg analytical scale previous to chemical analysis in a GCMS.

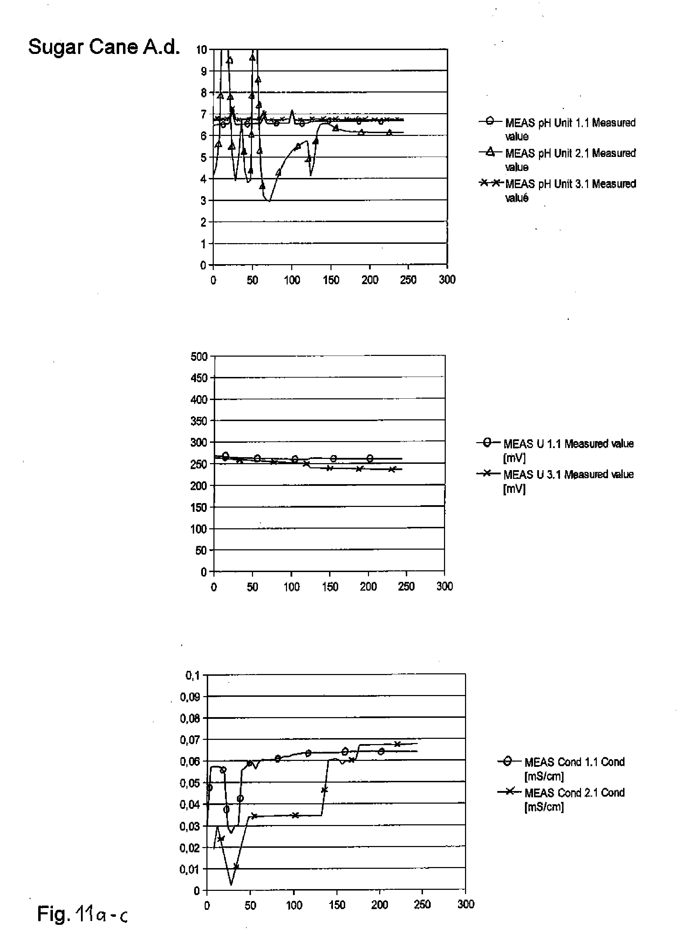

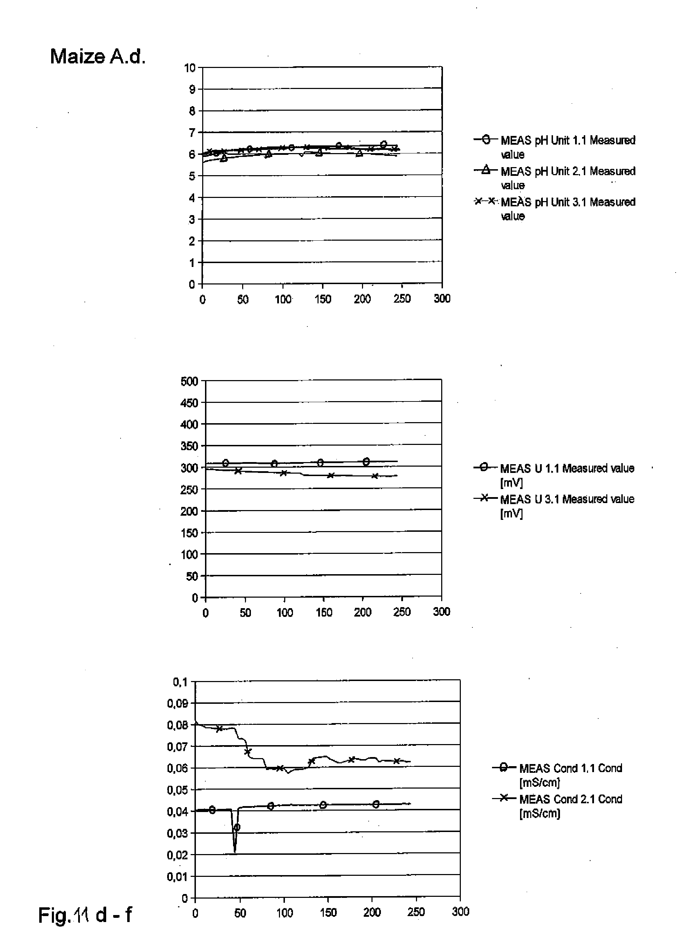

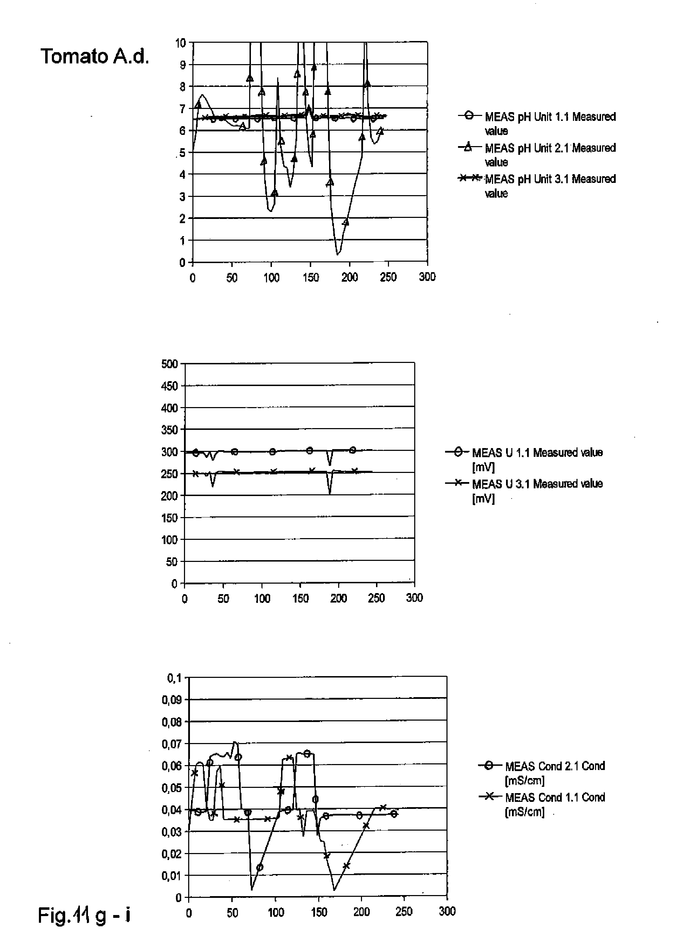

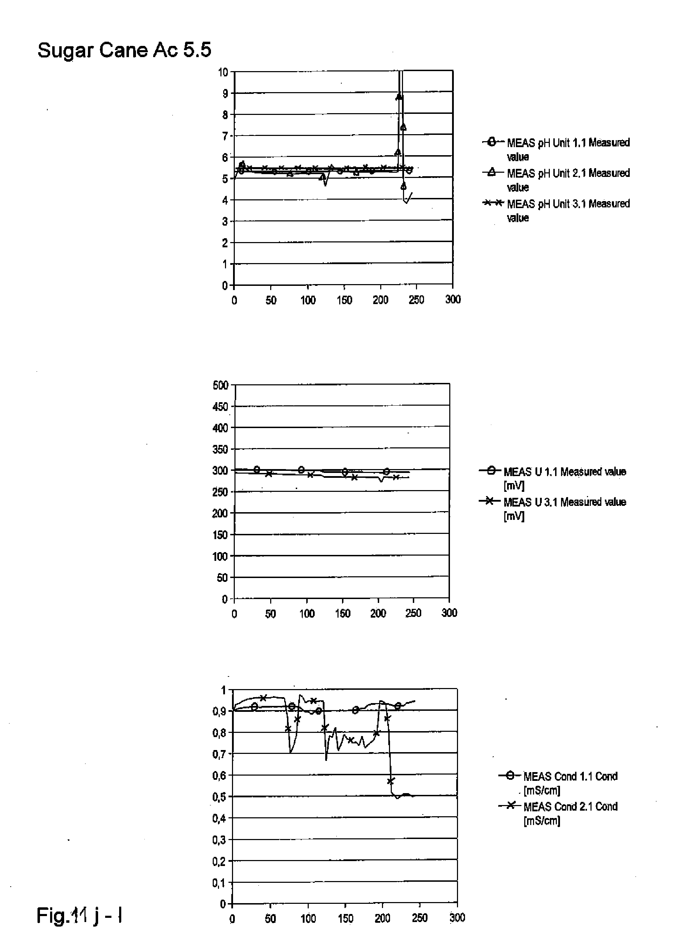

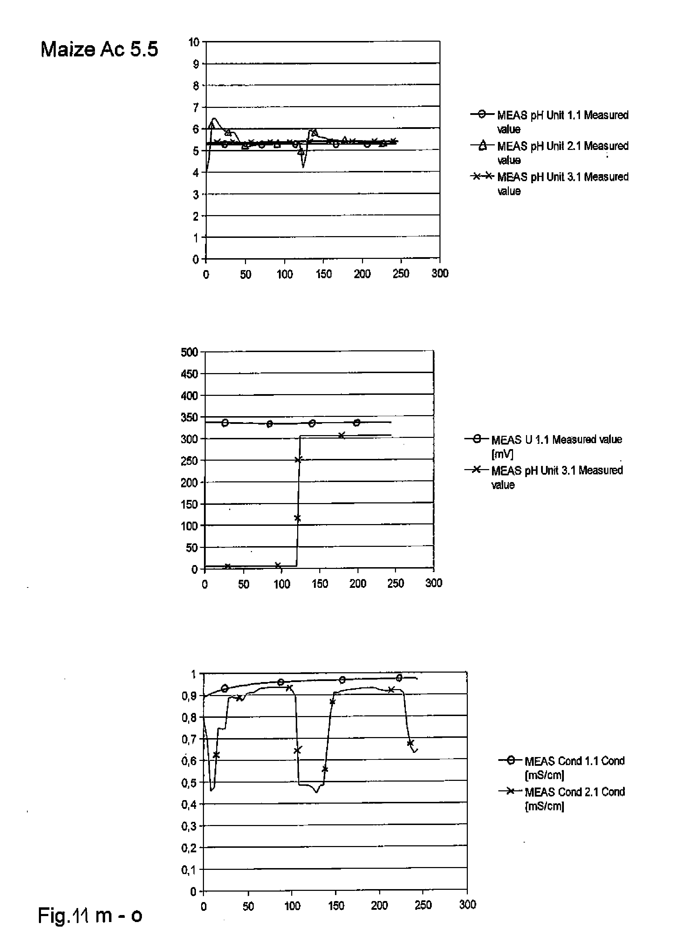

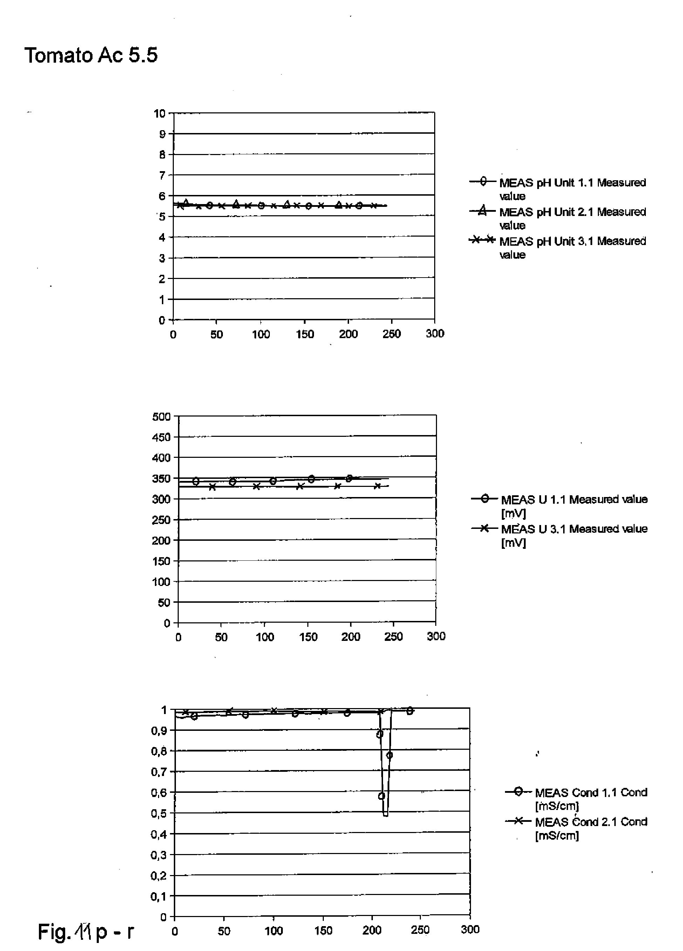

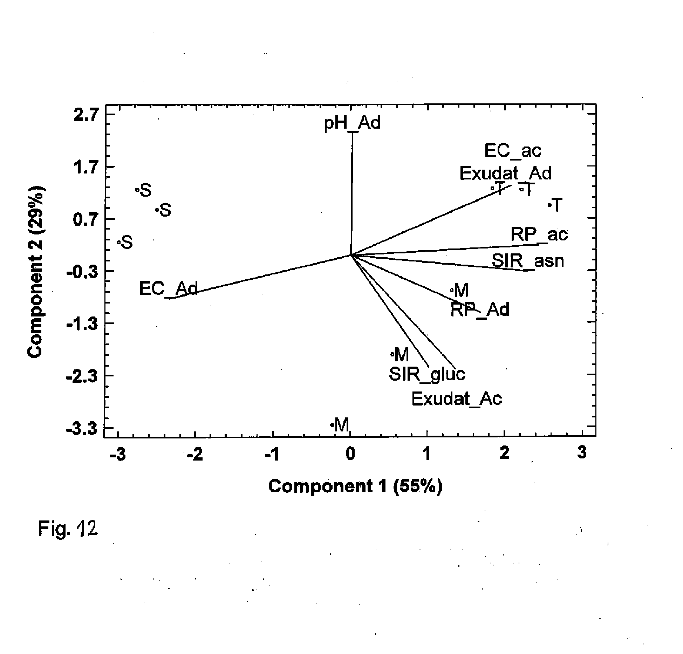

Extraction times to equilibrium (asymptotic approach, less than 5 % signal change) ranged between from 120 min (tomato) to 210 min (sugar cane). The electrochemical endpoint values of extraction differed in a small, but significant range (last 5 min of records, Fig. 11). Principal component analysis revealed a plant specific relationship between root exudates, soil respiration, and also plant specific patterns of electrochemical parameters in the fresh extraction media (Fig. 12). As already indicated by the RP values, tomato plant exudates contained a high amount of organic acids (results not shown). The results confirm that electrochemical measuring is well suited to monitor not only substantial changes in nutrient solutions but also tiny changes of low concentrated pools in plant cultivation and extraction media. Also, it was shown that RP is a suitable indicator for potentially redoxactive or metal chelating compounds and should thus be measured along with EC and pH, if possible.

### Example 2

Determination of diffusion speed and effective diffusion coefficients, respectively, of substances through slimy matrices like pharmaceutical products or mucosa: Speed of permeation of ascorbic acid through a pectic acid matrix

Pectic acid matrices are a main constituent of most mucus like matrices (slimes) on mucous epithelia (mucosa) of animal and human tissues and plant root tips (mucilage). The conductivity of these mucines and mucigels for low molecular weight substances is crucial for metabolic processes like nutrient uptake of plants as well as for dose response interrelationship of pharmaceutical products (R. A. Cone, Advanced Drug Delivery Reviews 61, 2009:75-85). In the present example, the permeation speed of a known antioxidant (ascorbic acid) through an aqueous pectin matrix was tested. A frequently used method for such analysis is isotope tracing (Desai et al., Experientia 48, Birkhäuser Verlag, Basel, Switzerland, 1992:22-26). To avoid the implicit safety issues and expensive laboratory adaptations, the inventors proposed an alternative electrochemical approach employing the electrochemical measurement device according to the invention.

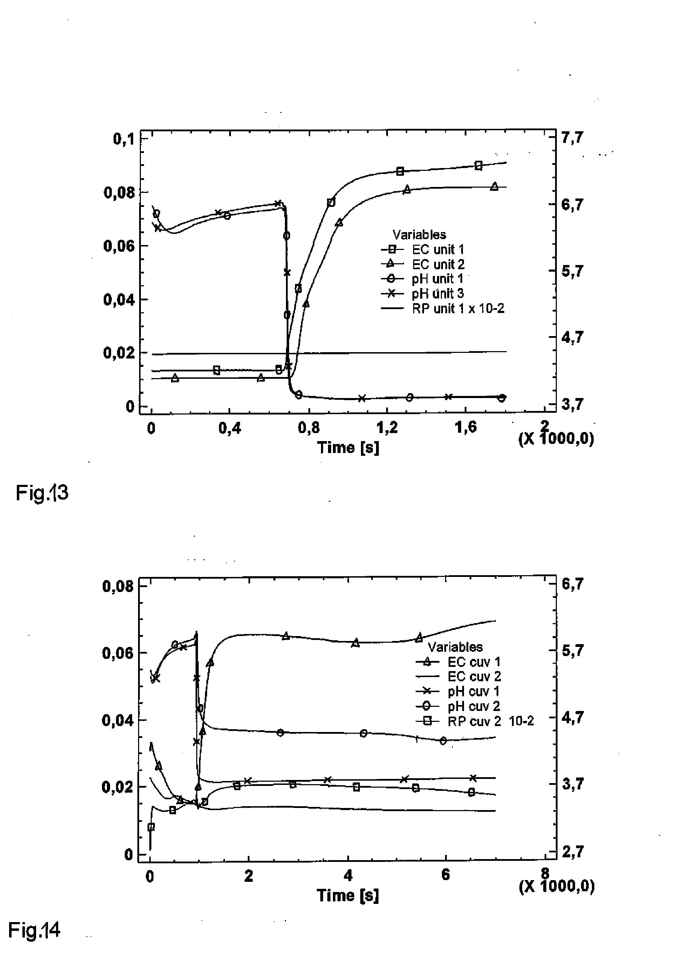

Electrochemical values (ph, RP, EC) of 20 mL 4mM ascorbic acid solution injected in a basic setup of the inventive device (cuvette only, 100 mL, Fig. 8) were compared to those of A.d. (demineralised water), Fig. 13. The cuvette was filled air bubble free with distilled water by closing the remaining electrode fittings with stoppers to exclude additional air oxygen. 4 mM ascorbate was chosen for the main permeation experiments. In the main experiment, a matrix composed of 1% pectin in distilled water was enclosed between two glass microfiber membranes in a polyacrylate glass (PMMA) tube with an inner diameter of 20 mm and a length of 60 mm (18.85 mL volume). This matrix tube (matrix container module) was enclosed between two cuvette blocks rigged with the same electrochemical sensors (pH,

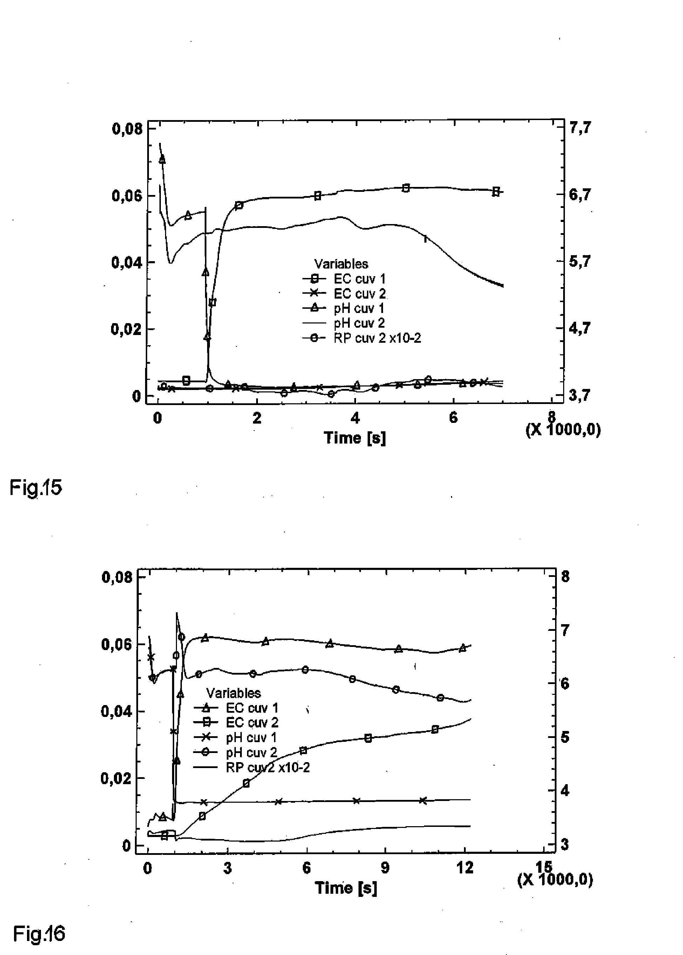

Rp, EC). Ascorbic acid (4 mM, 20 ml) was injected with a syringe in the Luer lock connector on the left hand side electrode block (test 02, Fig. 14), and, alternatively, after leaving those 20 mL available, in one of the top apertures, thus exerting no pressure on the matrix container (Fig. 15, 16, test 03, 04). No pressure or flow rate was applied, as the diffusion speed itself was to be assessed. Electrochemical signals were monitored in both electrode arrays with a frequency of 20 readings per minute using the metrohm® pH/RP and EC blocks and Tiamo® Software Ver 2.3. The experiment was concluded as a substantial change of signal in the right hand side electrode block was registered with all sensors.

Basic electrochemical values of a 4 mM ascorbate solution and A.d. are given in Fig. 13. In the permeation experiment, the EC value changed first, its increase marking the first change of electrochemically active compounds in the cuvette located behind the matrix container. It occurred between 25 minutes and 35 minutes after the addition of ascorbate. The later decrease of pH readings effectively marked the arrival of the ascorbic acid in the right hand side cuvette. The permeation times for ascorbate ranged from 90 to 110 minutes (Fig. 14-16). The readings in cuvette number two changed substantially quicker when ascorbate was injected in the Luer aperture of cuvette one, due to the pressure conducted via the adjacent matrix container, thus releasing galacturonic acid into cuvette number two (Fig. 14). The interaction with leaching galacturonate is also the suspected reason for the difference in conductivity values between the initial EC values obtained in the first experiment (concentration optimization test) and the initial EC values in the permeation experiment.

Steady increase of EC in the second cuvette indicates a leakage of the membrane (Fig. 16). Also, hydrolytic effects on the polygalacturonate matrix due to ascorbate are to be expected. The experimental setup and dimensions chosen for the matrix container proved to be applicable for permeation speed determinations with adequate accuracy, but further study is needed to arrive at more detailed mathematical expressions for the influence of solute-medium specific properties such as ligand-specific binding, ionic interactions, or response to environment pH (Y.Cu, W. M. Saltzmann, Advanced Drug Delivery Reviews 61, 2009:101-114). However, the substance permeating is subject to retention by the matrix not unlike the retention in a chromatographic separation column. The completion of diffusion through the matrix until equilibrium is reached will take much longer than the arrival of the first molecules. Future work will thus focus on concentration/diffusion speed coefficients of redox-active compounds in various matrices and also on the chemical changes occurring in the matrices themselves due to the impact of the permeating substances.

It has to be stated that one skilled in the art based on above explanation of the invention would be able to conceive other applications or modular configurations of the electrochemical measurement device that are also comprised within the scope of the invention.

### List of reference signs:

- 1: electrochemical measurement device
- 2: first stage
- 3: second stage
- 4: third stage
- 5: flow-through direction (arrow)
- 6: longitudinal axis
- 10: electrode holder module
- 11: flow-trough cuvette
- 12: electrode block
- 13: electrode joint opening
- 14: polyacrylate tube
- 15: free module end
- 16: module diameter
- 20: matrix container module
- 21: connecting adapter
- 22: outer tube
- 23: inner tube
- 25: O-ring sealing
- 30: end cap
- 31: Luer lock adapter
- 40: membrane carrier
- 41: universal membrane carrier body
- 42: (dialytic) membrane
- 43: spacer
- 44: membrane pressure plate
- 45: outer diameter of membrane carrier body
- 50: pressure sealing device
- 60: snap-on rack
- 61: base socket
- 70: redox potential sensor
- 80: pH sensor
- 90: conductivity sensor
- 100: monitored solution of plant nutrient
- 200: buffer solution
- 210: large matrix volume (artificial simulation)
- 220: small matrix volume (native mucus)
- 230: addition of investigated substance
- 240: to UV detector / fraction collector
- 300: buffer solution at pH 7 with 1mM KNO₃
- 310: 20µm filter disk
- 320: cationic exchange resin
- 330: pectin matrix with plant species specific additives
- 340: flow rate of 1-10 ml/min, to fraction collector
- 400: buffer solution
- 410: dialytic membrane
- 420: assay matrix of desoxyribose assay
- 430: carbon working electrode
- 440: Ag/AgCl reference electrode
- 450: Pt counter electrode
- 460: addition of reagents

## Claims

1. Electrochemical measurement device (1), comprising at least one essentially cylindrical electrode holder module (10) with a flow-through cuvette (11) of constant diameter (16) and having a longitudinal axis (6), and further comprising two end caps (30) mounted on the open module ends (15) of the electrode holder module (10) on opposite sides thereof to form a cavity for receiving a liquid, **characterized in that** the electrode holder module (10) is provided with a built-in electrode block (12) comprising at least one electrode joint opening (13) for holding an electrochemical sensor (70, 80, 90) and/or an electrode (430, 440, 450), with the at least one electrode joint opening (13) running perpendicular to the longitudinal axis (6) into the flow-through cuvette (11).

2. Electrochemical measurement device (1) according to claim 1, **characterized in that** the electrode block (12) comprises two or more electrode joint openings (13), wherein the electrode joint openings (13) are arranged in parallel to each other.

3. Electrochemical measurement device (1) according to claim 1 or 2, **characterized in that** the end caps (30) each have an opening in flow-through direction (5), preferably an opening with a Luer lock adapter.

4. Electrochemical measurement device (1) according to any of claims 1 to 3, **characterized in that** it further comprises one or more matrix container modules (20) and one or more further electrode holder modules (10), wherein the electrode holder modules (10) and the matrix container modules (20) are alternately connected in series, wherein each matrix container module (20) is positioned between two electrode holder modules (10).

5. Electrochemical measurement device (1) according to any of claims 1 to 4, **characterized in that** the open module ends (15) of the electrode holder module (10) each are provided with a pressure sealing device (50) sealing liquid-tight with a corresponding counter part inserted in the end cap (30) and/or with a matrix container module (20).

6. Electrochemical measurement device (1) according to claim 5, **characterized in that** each pressure sealing device (50) includes at least one O-ring sealing (25).

7. Electrochemical measurement device (1) according to any of claims 4 to 6, **characterized in that** each matrix container module (20) comprises connecting adapters (21) on its open ends for connecting with adjacent electrode holder modules (10).

8. Electrochemical measurement device (1) according to any of claims 4 to 7, **characterized in that** each matrix container module (20) comprises an outer tube (22) and an inner tube (23) that are concentrically positioned in longitudinal direction (6), wherein the inner tube (23) is adapted for positively retaining at least one membrane carrier (40).

9. Electrochemical measurement device (1) according to claim 9, **characterized in that** it further comprises at least one membrane carrier (40), wherein an outer diameter (45) of a membrane carrier body (41) positively fits into an inner tube (23) of the matrix container module (20).

10. Electrochemical measurement device (1) according to claim 10, **characterized in that** the membrane carrier (40) comprises at least two membranes (42) spaced apart by an intermediate spacer (43).

11. Electrochemical measurement device (1) according to any of claims 1 to 10, **characterized in that** it further comprises at least one snap-on rack (60) for supporting the electrode holder module (10) and/or the matrix container module (20) in a plugged-together arrangement, wherein the electrode holder module (10) and/or the matrix container module (20) are preferably securely mountable on the at least one snap-on rack (60).
